# EUROPEAN PATENT SPECIFICATION

(11) **EP 2 192 843 B1**
(45) Date of publication and mention of the grant of the patent: **01.06.2011**
(21) Application number: 08786930.1
(22) Date of filing: 06.08.2008
(51) Int. Cl.: A23F 3/14, A23F 3/16, A23F 3/30

(54) **BEVERAGE PRECURSOR AND PROCESS FOR THE MANUFACTURE THEREOF**
GETRÄNKVORSTUFE UND VERFAHREN ZU IHRER HERSTELLUNG
PRÉCURSEUR DE BOISSON ET PROCÉDÉ DE FABRICATION

(30) Priority: 19.09.2007 EP 07116753
(43) Date of publication of application: 09.06.2010
(73) Proprietor: Unilever PLC, London EC4Y 0DY (GB); Unilever N.V., 3013 AL Rotterdam (NL)
(72) Inventor: SMITH, Ian, Bedford Bedfordshire MK44 1LQ (GB)
(74) Representative: Keenan, Robert Daniel
(86) International application number: PCT/EP2008/060323
(87) International publication number: WO 2009/037048

(56) References cited:
- WO-A-01/70038
- WO-A-2005/067727
- WO-A-2006/037504
- WO-A-2007/098931
- FR-A- 2 789 268
- "Agent for tea plant to enhance prodn. of L-theanine - comprises ethylamine hydrochloride, plant hormone, auxin, cytokinin, vitamin(s), aminoacid(s), nucleic acid and minerals" DERWENT, 30 April 1996 (1996-04-30), XP002411621
- MATSUURA T ET AL: "EFFECTS OF PRECURSOR, TEMPERATURE, AND ILLUMINATION ON THEANINE ACCUMULATION IN TEA CALLUS" AGRICULTURAL AND BIOLOGICAL CHEMISTRY, JAPAN SOC. FOR BIOSCIENCE, BIOTECHNOLOGY AND AGROCHEM, TOKYO, JP, vol. 54, no. 9, 1990, pages 2283-2286, XP009075897 ISSN: 0002-1369

## Description

### TECHNICAL FIELD OF THE INVENTION

The present invention relates to a beverage precursor comprising black leaf tea. The present invention also relates to a process for manufacturing beverage precursors comprising black leaf tea.

### BACKGROUND TO THE INVENTION

Generally, to prepare black leaf tea, fresh green leaves of the plant *Camellia sinensis* are withered (a process to allow the plucked tea leaves to lose moisture and bring about chemical / biochemical changes especially in aroma), macerated, fermented (in which process enzymes in the tea leaf use atmospheric oxygen to oxidise various substrates to produce coloured products) and then dried at high temperature (to inactivate the enzymes). Green tea manufacture does not involve a fermentation process although partial fermentation may be used to produce intermediate-type teas known as "oolong" tea.

Tea may be consumed as a hot beverage or as a cold beverage (for example iced tea). The numerous compounds in the leaves that give the beverage its unique organoleptic properties are only sparingly soluble in cold water therefore tea is usually infused in water at temperatures close to 100°C.

Cold water soluble teas are usually prepared by spray drying the liquor obtained by extraction of black tea. However, this process requires high temperatures or treatment with harsh chemicals such as alkalis, which adversely affect tea attributes including taste, colour and flavour.

WO 2005/067727 (Unilever PLC *et al*.) concerns a process for the manufacture of a tea product which is readily infusible and has improved red colour. The process comprises contacting black tea with ascorbic acid and/or its salts, an oxidizing agent and water for a period of at least 5 minutes followed by drying. The teas have a good red colour. The publication also teaches that the black tea is preferably additionally contacted with one or more amino acids prior to drying. Despite the fact that the technology disclosed in WO 2005/067727 represents a significant improvement in producing black leaf teas that infuse rapidly and have good red colour, there is a need to produce teas with good infusion performance using compounds naturally associated with tea. Consumers are increasingly looking for products with a perceived natural image and are particularly wary of products containing ingredients which may be perceived as artificial additives.

WO2007/098931 discloses a process for preparing a tea product with an enhenced level of theanine, wherein tea leaf and/or shoot are contacted with a theanine precusor.

Theanine is an amino acid which, within the plant kingdom, is uniquely found in tea (*Camellia sinensis*) and comprises about 1% by weight of dry material in tea leaves.

We have now found that compounding specific levels of theanine with black tea can produce a composition with improved infusion performance without the need to oxidise the theanine and/or react it with ascorbic acid.

### DEFINITIONS

### Beverage

As used herein the term "beverage" refers to a substantially aqueous drinkable composition suitable for human consumption.

### Beverage Precursor

A beverage precursor is defined as a fabricated composition suitable for preparing a beverage.

### Tea

"Tea" for the purposes of the present invention means material from *Camellia sinensis* var. *Sinensis* and/or *Camellia sinensis* var. *Assamica.*

"Leaf tea" for the purposes of this invention means tea leaves or a mixture of tea leaves and tea stem in an uninfused form. Where the leaf tea comprises stem it is preferred that the amount of stem is kept to a minimum as tea leaves produce a higher quality beverage than stem. Thus it is preferred that the leaf tea comprises at least 50% by weight of tea leaves, more preferably at least 70% and most preferably from 80 to 100%.

"Black leaf tea" refers to substantially fermented leaf tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

### Coating

Where a leaf tea is described as "coated" with a substance, it should be understood that this means that the substance is exogenous to the leaf tea but has been combined with leaf tea in such a manner that it is cohesive therewith. Thus, whilst at least some of the substance coating the leaf tea may be (and preferably is) on the surface of the leaf tea, the term "coating" also encompasses absorbing the substance into the leaf tea.

### SUMMARY OF THE INVENTION

In a first aspect, the present invention provides a beverage precursor comprising black leaf tea wherein the precursor comprises theanine in an amount of at least 4% by dry weight of the precursor.

We have found that precursors with relatively high levels of theanine have improved infusion performance compared to precursors having theanine levels typical of black leaf tea alone. Without wishing to be bound by theory, we believe that theanine may help to solubilise the coloured polyphenol fraction (e.g. theaflavin and/or thearubigin) of black tea.

We have also found that theanine may be absorbed onto black tea in very high amounts, making it possible to manufacture black tea coated with a high level of theanine. Furthermore, this coated black tea can be blended with uncoated tea to improve the infusion performance thereof.

Thus in second aspect, the present invention provides a process for manufacturing a beverage precursor, the process comprising the steps of:
i) coating black leaf tea with a composition comprising theanine to yield coated black leaf tea comprising at least 8% theanine by dry weight of the coated black tea; and then
ii) blending the coated black leaf tea with uncoated leaf tea.

Although any suitable process may be used to manufacture the beverage precursor of the first aspect, advantageously the process of the second aspect may be used. Thus the present invention also provides the beverage precursor of the first aspect obtained and/or obtainable by the process of the second aspect.

### DETAILED DESCRIPTION

### Beverage Precursor

### Theanine:

The precursor comprises at least 4% theanine by dry weight. In order to further enhance the infusion performance of the black tea, it is preferred that the precursor comprises theanine in an amount of at least 6%, more preferably at least 8%, more preferably still at least 12% and most preferably at least 20% by dry weight of the precursor. To retain the familiar properties of black tea, however, it is preferred that the level of theanine is not too high. Thus it is preferred that the amount of theanine is less than 50%, more preferably less than 40% and most preferably less than 35% by dry weight of the precursor.

It is preferred that the theanine is in the L-form because L-theanine is the naturally occurring isomer. Thus it is preferred that at least 90% of the theanine is L-theanine, more preferably at least 95% and most preferably from 98 to 100%.

Some of the theanine will usually be naturally present in the black leaf tea. However, in order to obtain the high levels required to enhance infusion performance the precursor will usually comprise added theanine, i.e. theanine exogenous to the black leaf tea. Typically the amount of added theanine will make up at least 75% of the total theanine in the precursor, more preferably at least 85%, more preferably still at least 90% and most preferably from 95 to 100%. The added theanine may comprise synthetic theanine, such as Suntheanine^{™} from the Taiyo Corporation. Alternatively or additionally the added theanine may be part of a tea extract, especially a tea extract naturally enriched in theanine such as those described in international patent applications WO 2006/021317, WO 2006/037503, WO 2006/037511 and/or WO 2006/037504, which are hereby incorporated by reference in their entirety.

### Black leaf tea:

In order to maximise the familiar organoleptic properties of black tea it is preferred that the beverage precursor comprises black leaf tea in an amount of at least 60% by dry weight of the precursor, more preferably at least 70% and most preferably from 80 to 96%.

The black leaf tea may conveniently act as a carrier for added theanine. Thus in a preferred embodiment at least some of the black leaf tea is coated with at least some of the theanine. For example, at least 75% of the total theanine in the precursor may be coated on at least some of the black leaf tea, more preferably at least 85%, more preferably still at least 90% and most preferably from 95 to 100%. Especially preferred is that substantially all of the added theanine is coated on at least some of the black leaf tea.

All of the black leaf tea may be coated with theanine. However, whilst the black leaf tea provides a convenient carrier for the theanine, the coating may alter some properties of the leaf such as the appearance of the leaf. We have found that such effects can be diluted without affecting the enhanced infusion performance by blending the coated leaf with uncoated leaf. Thus in a preferred embodiment the weight ratio of coated to uncoated leaf tea in the precursor is from 1:50 to 5:1, more preferably from 1:20 to 2:1, more preferably still from 1:10 to 1:1 and most preferably from 1:5 to 1:2.

### Other components:

The precursor may comprise additional components such as biopolymers (including starches and/or gums), sweeteners, acids, polyphenols, caffeine, flavours, or mixtures thereof. Particularly preferred is caffeine as this may add bitter flavour to beverages prepared from the precursor which may help to remove any unwanted taste of the theanine. Furthermore, caffeine enhances certain physiological effects of theanine. Thus in a preferred embodiment the precursor comprises caffeine. The weight ratio of theanine to caffeine is preferably in the range of 10:1 to 1:5, more preferably from 5:1 to 1:1.5.

Because enhanced infusion performance is provided by the theanine there is no need for additional infusion aids. Thus it is preferred that the precursor is free of added ascorbic acid, its salts and/or oxidation products. It is also preferred that the precursor is free from added oxidising agents. In a particularly preferred embodiment the dry matter of the beverage precursor consists of black leaf tea and theanine.

The precursor will typically comprise water. However, it is preferred that the precursor is substantially dry as theanine is especially prone to degradation in aqueous solution. Thus it is preferred that the precursor comprises less than 30% water by weight of the precursor, more preferably from 1 to 10% by weight.

### Product form and packaging:

In a preferred embodiment the precursor will be in the form of a unit dose sufficient to provide a single beverage serving when infused. For example, the dry mass of the precursor may range from 1 to 5 g, more preferably from 1.5 to 3.5 g.

As the precursor comprises leaf tea it is especially preferred that it is packaged in an infusion package such as a tea bag.

In use, the beverage precursor is used to manufacture a beverage by contacting the precursor with an aqueous medium. The aqueous medium may, for example, be water, milk or a mixture thereof.

### Process

### Coating the leaf tea:

The process of the invention comprises the step of (i) coating black leaf tea with a composition comprising theanine to yield coated black leaf tea comprising at least 8% theanine by dry weight of the coated black tea.

The high amount of theanine in the coated black tea allows for blending the coated tea with uncoated tea using only a relatively small amount of the coated tea whilst still enhancing the infusion performance of the beverage precursor. Thus it is preferred that the coated black leaf tea comprises at least 10% theanine by dry weight of the coated black tea, more preferably at least 15%, more preferably still at least 20% and most preferably from 25 to 60%.

Some of the theanine in the coated black leaf tea will usually be naturally present in the black leaf tea. However, typically the theanine in the composition comprising theanine will make up at least 75% of the total theanine in the coated black leaf tea, more preferably at least 85%, more preferably still at least 90% and most preferably from 95 to 100%.

The composition comprising theanine may comprise synthetic theanine, such as Suntheanine^{™} from the Taiyo Corporation. Alternatively or additionally the composition comprising theanine may be part of a tea extract, especially a tea extract naturally enriched in theanine such as those described in international patent applications WO 2006/021317, WO 2006/037503, WO 2006/037511 and/or WO 2006/037504, which are hereby incorporated by reference in their entirety.

The amount of theanine in the composition comprising theanine may, for example, range from 5 to 100% by dry weight of the composition. It is preferred that the composition comprises at least 10% theanine by dry weight of the composition, more preferably at least 20%, more preferably still at least 50% and most preferably at least 80%. The composition may comprise additional dry components such as biopolymers (including starches and/or gums), sweeteners, acids, polyphenols, caffeine, flavours, or mixtures thereof. In a particularly preferred embodiment the composition comprises water-soluble tea solids such as caffeine, polyphenols or a mixture thereof, especially preferred is caffeine.

It is preferred that the black leaf tea is not contacted with an oxidising agent during the coating step (i) as theanine is easily degraded by oxidising agents.

Coating may be achieved in any suitable manner, however in a preferred embodiment, the black leaf tea is contacted with the composition comprising theanine in the presence of a solvent and the solvent is then removed. The preferred solvent is water which is removed by drying, preferably in a fluid bed drier as this avoids contact of the tea with hot surfaces which may lead to scorching of the tea. The amount of solvent removed is preferably sufficient that the coated black leaf tea comprises the solvent in an amount of less than 30% by weight of the coated black leaf tea, more preferably from 1 to 10%.

Where the solvent is water, the coating may be achieved, for example, by soaking the black leaf tea in an aqueous solution of the composition and/or spraying the aqueous solution onto the black leaf tea.

It is preferred that the amount of solvent is not too large as removal of large amounts of solvent would require a long time and/or large amount of energy. Thus it is preferred that the weight ratio of solvent to black leaf tea in step (i) is from 10:1 to 1:10, more preferably from 5:1 to 1:5, more preferably still from 3:1 to 1:2 and most preferably from 2:1 to 1:1.

It is preferred that the black leaf tea is agitated during the coating step (i) to allow for coating of a maximum amount of the black leaf tea.

### Blending:

The process comprises the step of (ii) blending the coated black leaf tea with uncoated leaf tea. Whilst there is no limit to the proportions in which the coated black leaf tea may be blended with uncoated leaf tea, it is preferred that the coated and uncoated leaf tea are blended in a dry weight ratio of from 1:50 to 5:1, more preferably from 1:20 to 2:1, more preferably still from 1:10 to 1:1 and most preferably from 1:5 to 1:2. The uncoated leaf tea is preferably black leaf tea.

### Additional Steps:

In a preferred embodiment the process comprises one or more additional steps selected from sorting the leaf tea according to size, packaging the precursor in an infusion package or a combination thereof. In a particularly preferred embodiment, the process comprises sorting the black leaf tea according to size before coating in step (i). Sorting before coating minimises the risk of wasting theanine-rich material which could result if sorting only occurs after step (i).

### The beverage precursor:

The beverage precursor recovered from the process preferably has the composition as described herein above for the precursor of the first aspect, including any or all of the preferred embodiments thereof.

### EXAMPLES

The invention will be further illustrated by reference to the following non-limiting examples.

### Example 1

This Example demonstrates the improvement in infusion performance obtained by adding theanine to black leaf tea.

### Materials:

Black leaf tea was Lipton Yellow Label^{™} supplied by Unilever Foodsolutions (Crawley, UK) and had a total theanine content of about 1% by weight.

Theanine was Suntheanine^{™} supplied by Taiyo Kagaku (Yokkaichi, Japan).

### Sample Preparation:

Six samples were prepared with varying amounts of theanine as shown in table 1.

**TABLE 1**

| **Sample No.** | **Mass of Black Leaf Tea (g)** | **Mass of Theanine Added (g)** | **Theanine Content (% dry weight of sample)** |
|---|---|---|---|
| 1 | 50 | 0 | 1 |
| 2 | 50 | 5 | 10 |
| 3 | 50 | 10 | 18 |
| 4 | 50 | 15 | 24 |
| 5 | 50 | 20 | 29 |
| 6 | 50 | 25 | 34 |

Each sample was prepared by dissolving the indicated amount of theanine in 75 ml of de-ionised water followed by wetting 50 g of the black tea with the resulting theanine solution (for Sample 1 75 ml of deionised water was used without added theanine). The mixture of leaf and theanine solution was stirred by hand until all of the solution was absorbed by the tea. After a storage period of 1 hour at room temperature (~20°C), each sample was dried in a Fluid Bed Dryer at an air temperature setting of 100°C. Each dry sample was then sieved to obtain the 425-850 nm size fraction ready for infusion. By "425-850 nm size fraction" is meant that portion of the sample which passed through an 850 nm aperture screen and was retained by a 425 nm aperture screen.

### Infusion Performance:

Infusion performance was determined separately for each sample using a UV/vis spectrophotometer equipped with a flow cell. The flow cell was coupled to a jacketed vessel and infusion liquor pumped through the cell with a peristaltic pump. The jacketed vessel contained 200 ml of deionised water at a temperature of 65°C to which was added sufficient sample to yield an infusion mixture containing black leaf tea and water in a weight ratio of 1:100, i.e., 2 g of black leaf tea. The amount of each sample added to the vessel is given in table 2. The absorbance at 445 nm after an infusion time of 60 s was used as a measure of the amount of infused solids. The infusion performance of each sample was measured twice and the value for each of the two runs is given in table 2.

**TABLE 2**

| **Sample No.** | **Amount of Sample Added to Vessel (g)** | **Absorbance at 445 nm after 60 s at 65°C** | | |
|---|---|---|---|---|
| | | **Run 1** | **Run 2** | **Mean** |
| 1 | 2.0 | 0.63 | 0.63 | 0.63 |
| 2 | 2.2 | 0.65 | 0.66 | 0.66 |
| 3 | 2.4 | 0.71 | 0.73 | 0.72 |
| 4 | 2.6 | 0.87 | 0.91 | 0.89 |
| 5 | 2.8 | 0.91 | 0.90 | 0.91 |
| 6 | 3.0 | 1.15 | 1.16 | 1.16 |

The data in table 2 illustrate that the samples with added theanine showed faster infusion compared to the sample with no added theanine (Sample 1). Analysis of absorbance data at 700 nm showed that the differences observed in infusion rate were not due to extra haze in the infusions containing theanine.

### Example 2

This Example demonstrates the improvement in infusion performance obtained by blending uncoated black leaf tea with black leaf tea coated with theanine.

### Materials:

Black leaf tea and theanine were as in Example 1. The coated black leaf tea was Sample 6 from Example 1. The uncoated leaf tea was sieved to the same size as the coated tea (425-850 nm size fraction).

### Sample Preparation:

Sample 7 was prepared by mixing the uncoated black tea and coated black tea in a weight ratio of 2.67:1. The resulting sample thus had a theanine content of 10% by dry weight.

### Infusion Performance:

Infusion performance was determined as in Example 1 except that the water temperature was 85°C. Sample 1 from Example 1 was used as a control. The results are shown in table 3.

**TABLE 3**

| **Sample No.** | **Amount of Sample Added to Vessel (g)** | **Absorbance at 445 nm after 60 s at 85°C** |
|---|---|---|
| 1 | 2.0 | 0.86 |
| 7 | 2.2 | 0.94 |

The data in table 3 illustrate that the sample containing black tea coated with theanine (sample 7) has improved infusion performance compared with a sample containing no added theanine (sample 1).

## Claims

1. A beverage precursor comprising black leaf tea **characterised in that** the precursor comprises theanine in an amount of at least 4% by dry weight of the precursor.

2. A beverage precursor according to claim 1 wherein the amount of theanine is at least 6% by dry weight of the precursor.

3. A beverage precursor according to claim 1 or claim 2 wherein the precursor comprises black leaf tea in an amount of at least 50% by dry weight of the precursor.

4. A beverage precursor according to any one of the preceding claims wherein at least some of the black leaf tea is coated with at least some of the theanine.

5. A beverage precursor according to claim 4 wherein at least 75% by weight of the theanine is coated on at least some of the black leaf tea.

6. A process for manufacturing a beverage precursor, the process comprising the steps of:
i) coating black leaf tea with a composition comprising theanine to yield coated black leaf tea comprising at least 8% theanine by dry weight of the coated black leaf tea; and then
ii) blending the coated black leaf tea with uncoated leaf tea.

7. A process according to claim 6 wherein the process comprises contacting the black leaf tea with the composition comprising theanine in the presence of a solvent and then removing the solvent.

8. A process according to claim 7 wherein the solvent is water which is removed by drying.

9. A process according to any one of claims 6 to 8 wherein the coated black leaf tea comprises at least 15% theanine by dry weight of the coated black leaf tea.

10. A process according to any one of claims 6 to 9 wherein the dry weight ratio of coated black leaf tea to uncoated leaf tea in step (ii) is from 1:50 to 5:1.

## Patentansprüche

1. Getränkvorläufer, der schwarzen Blatt-Tee umfasst, **dadurch gekennzeichnet, dass** der Vorläufer Theanin in einer Menge von wenigstens 4 Trockengewichts-% des Vorläufers umfasst.

2. Getränkvorläufer gemäß Anspruch 1, wobei die Menge an Theanin wenigstens 6 Trockengewichts-% des Vorläufers ist.

3. Getränkvorläufer gemäß Anspruch 1 oder Anspruch 2, wobei der Vorläufer schwarzen Blatt-Tee in einer Menge von wenigstens 50 Trockengewichts-% des Vorläufers umfasst.

4. Getränkvorläufer gemäß einem der vorangehenden Ansprüche, wobei wenigstens etwas des schwarzen Blatt-Tees mit wenigstens etwas des Theanin beschichtet ist.

5. Getränkvorläufer gemäß Anspruch 4, wobei wenigstens 75 Gewichts-% des Theanin auf wenigstens etwas des schwarzen Blatt-Tees aufgetragen ist.

6. Verfahren zur Herstellung eines Getränkvorläufers, wobei das Verfahren die Schritte:
i) Beschichten von schwarzem Blatt-Tee mit einer Zusammensetzung, die Theanin umfasst, um beschichteten schwarzen Blatt-Tee zu erhalten, der wenigstens 8 Trockengewichts-% Theanin, bezogen auf den beschichteten schwarzen Blatt-Tee, umfasst, und danach
ii) Mischen des beschichteten schwarzen Blatt-Tees mit unbeschichtetem Blatt-Tee,
umfasst.

7. Verfahren gemäß Anspruch 6, wobei das Verfahren In-Kontakt-Bringen des schwarzen Blatt-Tees mit der Zusammensetzung, die Theanin umfasst, in Gegenwart eines Lösungsmittels und danach Entfernen des Lösungsmittels umfasst.

8. Verfahren gemäß Anspruch 7, wobei das Lösungsmittel Wasser ist, das durch Trocknung entfernt wird.

9. Verfahren gemäß einem der Ansprüche 6 bis 8, wobei der beschichtete schwarze Blatt-Tee wenigstens 15 Trockengewichts-% Theanin, bezogen auf den beschichteten schwarzen Blatt-Tee, umfasst.

10. Verfahren gemäß einem der Ansprüche 6 bis 9, wobei das Trockengewichtsverhältnis von beschichtetem schwarzem Blatt-Tee zu unbeschichtetem Blatt-Tee in Schritt (ii) von 1:50 bis 5:1 liegt.

## Revendications

1. Précurseur de boisson comprenant du thé noir en feuilles, **caractérisé en ce que** le précurseur comprend de la théanine en une quantité d'au moins 4 % en poids sec du précurseur.

2. Précurseur de boisson selon la revendication 1, dans lequel la quantité de théanine est d'au moins 6 % en poids sec du précurseur.

3. Précurseur de boisson selon la revendication 1 ou la revendication 2, dans lequel le précurseur comprend du thé noir en feuilles en une quantité d'au moins 50 % en poids sec du précurseur.

4. Précurseur de boisson selon l'une quelconque des revendications précédentes, dans lequel au moins une partie du thé noir en feuilles est enrobée avec au moins une partie de la théanine.

5. Précurseur de boisson selon la revendication 4, dans lequel au moins 75 % en poids de la théanine sont enrobés sur au moins une partie du thé noir en feuilles.

6. Procédé de fabrication d'un précurseur de boisson, le procédé comprenant les étapes suivantes:
i) l'enrobage du thé noir en feuilles avec une composition comprenant de la théanine pour donner du thé noir en feuilles enrobées comprenant au moins 8 % de théanine en poids sec du thé noir en feuilles enrobées ; puis
ii) le mélange du thé noir en feuilles enrobées avec du thé en feuilles non enrobées.

7. Procédé selon la revendication 6, dans lequel le procédé comprend le contact du thé noir en feuilles avec la composition comprenant la théanine en présence d'un solvant, puis l'élimination du solvant.

8. Procédé selon la revendication 7, dans lequel le solvant est de l'eau qui est éliminée par séchage.

9. Procédé selon l'une quelconque des revendications 6 à 8, dans lequel le thé noir en feuilles enrobées comprend au moins 15 % de théanine en poids sec du thé noir en feuilles enrobées.

10. Procédé selon l'une quelconque des revendications 6 à 9, dans lequel le rapport en poids sec entre le thé noir en feuilles enrobées et le thé en feuilles non enrobées dans l'étape (ii) va de 1: 50 à 5: 1.
